# EUROPEAN PATENT SPECIFICATION

(11) **EP 2 261 778 B1**
(45) Date of publication and mention of the grant of the patent: **15.02.2012**
(21) Application number: 10181957.1
(22) Date of filing: 26.02.2004
(51) Int. Cl.: G06F 3/033, G06F 1/16, H04M 1/725, G06F 3/048

(54) **Mobile device with integrated camera operations**
Mobilgerät mit integrierten Kamerafunktionen
Dispositif mobile avec opérations photographiques intégrées

(43) Date of publication of application: 15.12.2010
(62) Divisional of application: 04251088.3
(73) Proprietor: RESEARCH IN MOTION LIMITED, Waterloo, Ontario N2L 3W8 (CA)
(72) Inventor: Nobels, Jonathan, Guelph Ontario N1E 4S9 / CA (CA)
(74) Representative: Skone James, Robert Edmund

(56) References cited:
- EP-A- 1 349 407
- WO-A-01/98885
- GB-A- 2 315 186
- US-A- 5 943 603
- US-B1- 6 249 275
- US-B1- 6 466 830
- "SMARTPHONE AUS OESTERREICH" CT MAGAZIN FUER COMPUTER TECHNIK, HEISE ZEITSCHRIFTEN VERLAG, HANNOVER, DE, no. 5, 24 February 2003 (2003-02-24), page 38, XP001144262 ISSN: 0724-8679
- Hellerman, H; Hemmendinger, D: "Interrupt" In: Ralston, A; Reilly, E.D.; Hemmendinger, D: "Encyclopedia of Computer Science, Fourth Edition" 2003, John Wiley & Sons , Chichester, England , XP002607533 ISBN: 0-470-86412-5 , pages 928-931 * page 928, left-hand column, paragraph 1 - paragraph 3 *

## Description

The present invention relates generally to mobile devices and, in particular, to mobile devices with integrated camera operations.

Mobile hand-held computing devices such as personal digital assistants and messaging enabled communications devices are rapidly growing in popularity. More features are being incorporated into mobile hand-held computing devices. For example, there are now messaging enabled mobile phones that have display screens and built-in-cameras. Such phones allow pictures taken by the camera to be displayed on screen and stored on the phone and wirelessly transmitted as digital photos.

In order to incorporate digital photographs into e-mail, memos, word processing documents, tasks, contacts, or calendar entries, the user starts a dedicated camera application on the mobile device. The user then causes the camera to take a photograph and the resulting picture is stored as a digital file. The user then minimizes or closes the camera application and starts or returns to the relevant application program, such as an e-mail program, a scheduling program, or a word processing program, and attaches or inserts the digital file from its storage location in memory.

It will be appreciated that the prior art devices require a complex series of steps to achieve the desired result. In particular, the user must exit an active application, take a photograph, save the photograph, re-enter the application, locate the photograph within the database or file system, and then attach or insert the photograph into an active document in the application. The camera functions as a source of data only to a dedicated camera application, which saves the image data to memory in a database or file system.

US6249275 teaches a mobile device, specifically a portable pen-based tablet, designed to operate a program that accepts a variety of inputs to create a collection of captured data. The program provides blank pages into which a user may insert a variety of types of information including images, recorded audio, "ink", etc. Because the device and its program are specifically designed to accept these various inputs, the user need not select from menus or change modes for different types of input.

### GENERAL

The present invention may provide a mobile device and a method of integrating camera operations into a mobile device. In accordance with one aspect, the user may trigger the operating system to switch from an active application in which the user is editing a document to a camera application by activating a camera activator. The user may then capture an image by subsequently activating the camera activator, whereupon the active application is restored and the image data is inserted in-line within the document.

In one aspect, there may be provided a method of capturing image data and inserting the image data into an active document on a mobile device, the mobile device including a camera, a camera activator, and a camera listener interface, the mobile device further including an active application in which the active document is open and a camera application, the method comprising: determining that the active application is open in an editable mode and enabling the camera listener interface in response thereto; and when the camera listener interface is enabled: receiving a first signal from the camera activator; suspending operation of the active application in response to detection of the first signal and invoking the camera application; detecting a second signal from the camera activator; and in response to detection of the second signal, capturing image data via the camera, and automatically resuming operation of the active application and inserting the image data into the active document open in the active application.

In another aspect there may be provided a method of integrating camera operations into a mobile device, the mobile device comprising a camera and a camera activator, the mobile device having an active application and a camera application. The method may comprise the steps of switching from operation of the active application to the camera application in response to detection of a first signal from the camera activator; and detecting a second signal from the camera activator and, in response to detection of said second signal, capturing image data via the camera, resuming operation of the active application, and inserting said image data into an active document open in the active application.

The step of switching may comprise suspending the active application and invoking the camera application. The mobile device may comprise a display screen and the camera application may operate in a viewfinder mode for displaying a camera view on said display screen. The active document may comprise a document selected from the group including an e-mail message, an instant message, a word processing document, a spreadsheet, a contact entry, a personal profile, a calendar entry, a memo, a task reminder, and a multimedia message. The active document may be open in an editable mode within the active application prior to said step of switching. The method may further comprise the step of testing whether said active document is open in said editable mode prior to said step of switching. The method may further comprise the steps of activating an input field within said active document and enabling a camera listener interface in response to said step of activating, prior to said step of switching. The step of capturing image data may comprise creating an image object containing said image data. The step of inserting said image data into an active document may comprise passing said image object to said active application, whereupon said active application inserts said image within an input field in said active document. The camera activator may comprise a triggering device selected from the group including a button, a key, a switch, a dial, a touch pad, a touch screen, a key combination, and a software device.

In another aspect the present invention may provide a mobile device. A mobile device may comprise: a display; a processor and associated memory, the processor being configured to run an active application and a camera application, the active application being configured to open an active document; a camera for capturing images and providing image data for the images to the processor; a camera activator responsive to activation; and a camera listener interface configured to be enabled when the active application is determined to be in an editable mode, and wherein the camera listener interface is further configured to detect a first signal from the camera activator and to cause the processor to suspend the active application and invoke the camera application in response to the first signal from the camera activator, and, wherein the camera listener interface is further configured to detect a second signal from the camera activator and, in response thereto, to cause the camera to capture the image data and to cause the processor to resume the active application and to pass the active application the image data for insertion into the active document within the active application.

In another aspect the mobile device may comprise a processor and associated memory; a camera for capturing images and providing image data for said images to said processor; a camera activator responsive to user activation; and a camera listener interface associated with said processor for switching from an active application program to a camera application in response to a first signal from said camera activator, and, in response to a second signal from said camera activator, resuming said active application program and passing said active application program said image data for insertion into an active document within said active application program; whereby said camera captures said image data in response to said second signal.

The mobile device may comprise a body and a display screen. The display screen may be responsive to signals from said processor. The processor and associated memory may be housed within said body. The camera may be attached to said body. The camera activator may provide a first signal and a second signal to said processor in response to user activation. The camera application may output an image object containing said image data, and said camera listener interface may invoke said camera application in response to said first signal. The camera application may be invoke in a viewfinder mode, whereby a display screen of said mobile device may output an image corresponding to a view through said camera. The active document may comrpise a document selected from the group including an e-mail message, an instant message, a word processing document, a spreadsheet, a contact entry, a personal profile, a calendar entry, a memo, a task reminder, and a multimedia message. The active document may be open in an editable mode within the active application. The camera listener interface may comprise a test module for testing whether said active document is open in said editable mode prior to switching from the active application. The active application may comprise an enablement module for enabling said camera listener interface in response to said active application entering said editable mode. The camera activator may comprise a triggering device selected from the group including a button, a key, a switch, a dial, a touch pad, a touch screen, a key combination, and a software device. The camera listener interface may be incorporated within an operating system associated with said processor.

Other aspects and features of the present invention will be apparent to those of ordinary skill in the art from a review of the following detailed description when considered in conjunction with the drawings.

### BRIEF DESCRIPTION OF THE DRAWINGS

Reference will now be made, by way of example, to the accompanying drawings which show an embodiment of the present invention, and in which:

Figure 1 shows a block diagram of an embodiment of a mobile device system;

Figure 2 shows, diagrammatically, a front view of an embodiment of a mobile device;

Figure 3 shows, diagrammatically, a side view of an embodiment of a mobile device;

Figure 4 shows, diagrammatically, a back view of an embodiment of a mobile device;

Figure 5 shows, diagrammatically, a front view of a second embodiment of a mobile device; and

Figure 6 shows, in flowchart form, a method of integrating the operation of a camera and mobile device.

Similar reference numerals are used in different figures to denote similar components.

### DETAILED DESCRIPTION

The following description of one or more specific embodiments of the invention does not limit the implementation of the invention to any particular embodiment. In particular, the present invention is not limited to any particular operating system, mobile device architecture, mobile device form factor, or computer programming language.

Persons ordinarily skilled in the art will also understand that the references herein to a camera activator or, specifically, a camera button, are not intended to limit the present invention to any particular type or style of user activation or triggering device. Any activation device that a user is capable of manipulating in order to cause a signal to be sent to the processor may be employed in place of a conventional camera button. The terms "camera button" or "camera activator" herein are meant to encompass all such user activation devices, including buttons, keys, keypad contacts, switches, dials, touch pads, touch screens, etc. In some embodiments, the "camera activator" may be a particular combination of keys on a keyboard, whereby such keys have been assigned the function of operating as a camera button. For example, Ctrl-Alt-C may be designated as the "camera activator" combination of keystrokes. The term "camera activator" is also intended to encompass non-physical devices, including software triggers, such as a dropdown menu, "softkey", or a timer. It will also be understood that the term "camera activator" may refer to more than one activator if separate activators are used to provide a first signal and a second signal, respectively.

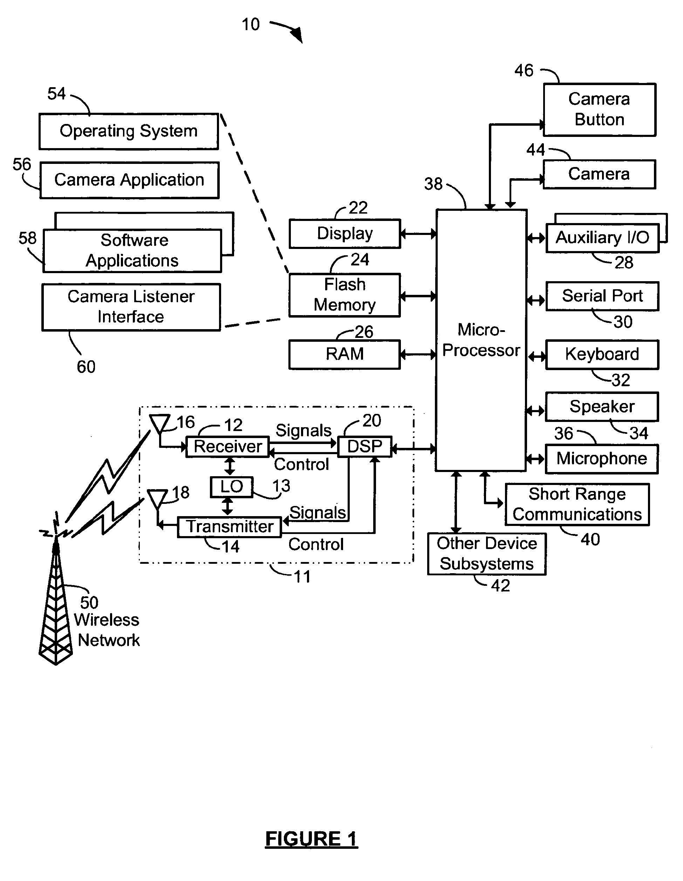

Referring now to the drawings, Figure 1 is a block diagram of a hand-held computing device to which the present invention is applied in an example embodiment. In the example embodiment, the hand-held computing device is a two-way mobile communication device 10 having data and possibly also voice communication capabilities. In an example embodiment, the device has the capability to communicate with other computer systems on the Internet. Depending on the functionality provided by the device, in various embodiments the device may be a data communication device, a multiple-mode communication device configured for both data and voice communication, a mobile telephone, a PDA (personal digital assistant) enabled for wireless communication, or a computer system with a wireless modem, among other things. In various embodiments, the present invention may also be applied to handheld computing devices, such as PDAs and digital cameras, that are not enabled for communications.

In this embodiment, in which the device 10 is enabled for communications, the device 10 includes a communication subsystem 11, including a receiver 12, a transmitter 14, and associated components such as one or more, preferably embedded or internal, antenna elements 16 and 18, and a processing module such as a digital signal processor (DSP) 20. In some embodiments, the communication subsystem includes local oscillator(s) (LO) 13, and in some embodiments the communication subsystem 11 and a microprocessor 38 share an oscillator. As will be apparent to those skilled in the field of communications, the particular design of the communication subsystem 11 will be dependent upon the communication network in which the device is intended to operate.

Signals received by the antenna 16 through a wireless communication network 50 are input to the receiver 12, which may perform such common receiver functions as signal amplification, frequency down conversion, filtering, channel selection and the like, and in some embodiments, analog to digital conversion. In a similar manner, signals to be transmitted are processed, including modulation and encoding for example, by the DSP 20 and input to the transmitter 14 for digital to analog conversion, frequency up conversion, filtering, amplification and transmission over the communications network 50 via the antenna 18.

The device 10 includes the microprocessor 38 that controls the overall operation of the device. The microprocessor 38 interacts with communications subsystem 11 and also interacts with further device subsystems such as the display 22, flash memory 24, random access memory (RAM) 26, auxiliary input/output (I/O) subsystems 28, serial port 30, keyboard or keypad 32, speaker 34, microphone 36, a short-range communications subsystem 40, and any other device subsystems generally designated as 42. The device 10 of the present system includes an integral camera 44 that interacts with microprocessor 38. The device 10 may also include a dedicated camera button 46 for triggering operation of the camera, as will be further described below. In some embodiments, the dedicated camera button 46 may be integrated within the keyboard or keypad 32.

Some of the subsystems shown in Figure 1 perform communication-related functions, whereas other subsystems may provide "resident" or on-device functions. Notably, some subsystems, such as keyboard 32 and display 22 for example, may be used for both communication-related functions, such as entering a text message for transmission over a communication network, and device-resident functions such as a calculator or task list.

Operating system software 54 and various software applications 58 used by the microprocessor 38 are, in one example embodiment, stored in a persistent store such as flash memory 24 or similar storage element. Those skilled in the art will appreciate that the operating system 54, software applications 58, or parts thereof, may be temporarily loaded into a volatile store such as RAM 26. It is contemplated that received communication signals may also be stored to RAM 26.

The microprocessor 38, in addition to its operating system functions, preferably enables execution of software applications 58 on the device. A predetermined set of software applications 58 which control basic device operations, including at least data and voice communication applications for example, will normally be installed on the device 10 during manufacture. Further software applications 58 may also be loaded onto the device 10 through the network 50, an auxiliary I/O subsystem 28, serial port 30, short-range communications subsystem 40 or any other suitable subsystem 42, and installed by a user in the RAM 26 or a non-volatile store for execution by the microprocessor 38. Such flexibility in application installation increases the functionality of the device and may provide enhanced on-device functions, communication-related functions, or both. For example, secure communication applications may enable electronic commerce functions and other such financial transactions to be performed using the device 10.

In a data communication mode, a received signal such as a text message or web page download will be processed by the communication subsystem 11 and input to the microprocessor 38, which will preferably further process the received signal for output to the display 22, or alternatively to an auxiliary I/O device 28. A user of device 10 may also compose data items within a software application 58, such as email messages for example, using the keyboard 32 in conjunction with the display 22 and possibly an auxiliary I/O device 28. Such composed items may then be transmitted over a communication network through the communication subsystem 11.

The serial port 30 in Figure 1 would normally be implemented in a personal digital assistant (PDA)-type communication device for which synchronization with a user's desktop computer (not shown) may be desirable, but is an optional device component. Such a port 30 would enable a user to set preferences through an external device or software application and would extend the capabilities of the device by providing for information or software downloads to the device 10 other than through a wireless communication network.

A short-range communications subsystem 40 is a further component which may provide for communication between the device 10 and different systems or devices, which need not necessarily be similar devices. For example, the subsystem 40 may include an infrared device and associated circuits and components or a Bluetooth™ communication module to provide for communication with similarly enabled systems and devices. The device 10 may be a handheld device.

Wireless mobile network 50 is, in an example embodiment, a wireless packet data network, (e.g. Mobitex™ or DataTAC™), which provides radio coverage to mobile devices 10. Wireless mobile network 50 may also be a voice and data network such as GSM (Global System for Mobile Communication) and GPRS (General Packet Radio System), CDMA (Code Division Multiple Access), or various other third generation networks such as EDGE (Enhanced Data rates for GSM Evolution) or UMTS (Universal Mobile Telecommunications Systems).

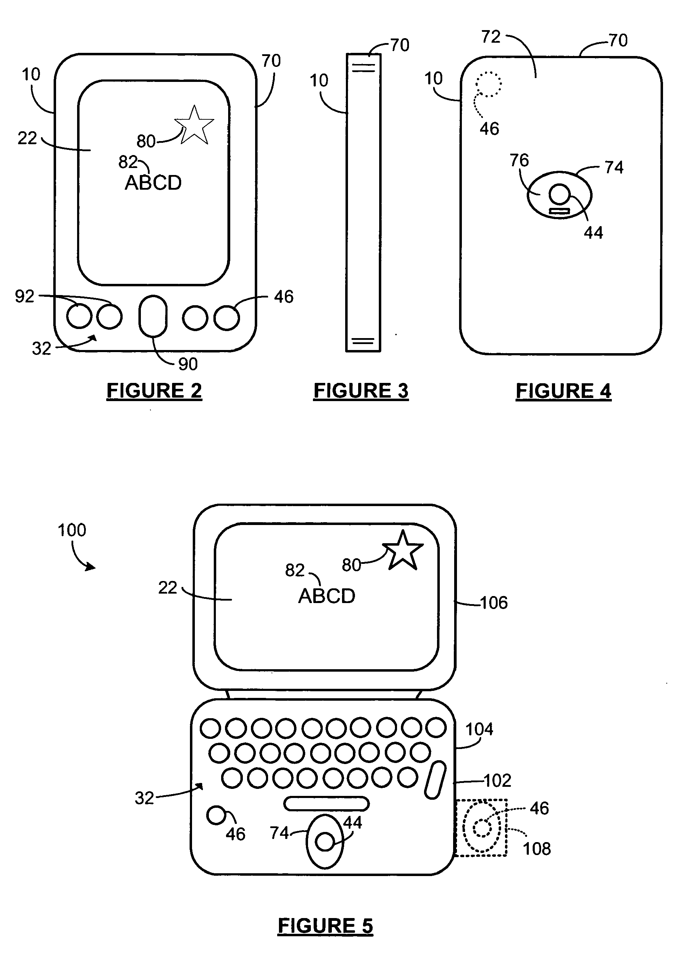

With reference to Figures 2 to 4, in an example embodiment, the components and subsystems of mobile device 10 are housed within a hard plastic main body case 70 that is configured to be held with one or two hands while the device 10 is in use. The main body case 70 may be a single piece of may include two or more portions coupled together. For example, in one embodiment, the device 10 is a "flip phone" and the main body case 70 includes two portions hinged together such that the two portions may be brought into closed contact with one another when the device 10 is not in use. The various components of the device 10 need not be located in the same portion of the main body case 70.

The case 70 may include a hook (not shown) so that it can be secured to a user's belt or pant's top, or it may be used in conjunction with a soft case (not shown) that can be mounted to the user's belt or pant's top and into which the mobile device 10 can be inserted for carrying. Mobile device 10 will typically be small enough to fit inside a standard purse or suit jacket pocket. The screen 22 is visible from the front of the device, as is keypad or keyboard 32. The keyboard 32 includes buttons or keys 90, 92 positioned to be actuated by the thumbs or fingers of the user. In the illustrated embodiment of Figure 2, the keyboard has relatively few keys, however in some embodiments, the keyboard includes 26 or more alphanumeric and control keys.

The device 10 includes a camera activator, which in one embodiment is a camera button 46, as shown in Figure 2. The camera button 46 need not be located on the front of the device 10; it could be in other locations, such as on the back of the device 10 as shown in Figure 4 (in phantom). Also seen in Figure 4, the case 70 includes a substantially planar back wall 72, which has an opening 74 provided therethrough. A transparent lens 76 covers the opening 74, behind which the camera 44 is located.

In various embodiments, the camera 44 is located in different locations than on the back of the device 10, and the handheld device 10 has different configurations other than the example embodiment described above. For example, the camera 44 may be located facing outward from the front of the device 10. By way of non-limiting example, Figure 5 shows a front view of a handheld device 100 according to another embodiment of the invention. Device 100 is similar to device 10, however the keyboard 32 of device 100 includes a thumb-activated QWERTY keyboard next to which camera 44 is located, and the main body or case 102 of the device 100 includes first and second portions 104, 106 that are pivotally mounted together. Second case portion 106 houses display 22, and the first case portion 104 houses the keyboard 32, which is configured for thumb typing. In hand-held device 100, the camera 44 is provided through opening 74 on the front of the first case portion 104. The camera 44 faces the same direction as the keyboard 32 for capturing images of the user while operating the device. In such an embodiment, the camera 44 may be configured to capture successive images in a video format so as to provide streamed video as a webcam.

In some embodiments, the camera is pivotally mounted to the case of the handheld device such that it can be rotated to face in a direction desired by the user. By way of example, a pivotally mounted camera unit 108 is shown in phantom in Figure 5. The camera unit 108 may be detachable from case 102.

Referring now to Figures 1 and 2, at least some of the software applications 58 that are loaded onto the device 10 will, together with operating system 54, implement graphical user interfaces that display text 82 and/or graphics 80 on the screen 22. The graphics 80 displayed by the device 10 may include digital pictures or video captured by the camera 44. The software applications 58 may include a variety of application programs, such as an e-mail program, a word processing program, a spreadsheet program, a calendar program, a contacts program, etc. When operating, such software applications 58 will often have an active document open that is being composed, created, or modified by the user. For example, a word processor may have an active document open into which the user is typing text via the keyboard 32; an e-mail program may have a draft e-mail open that the user is composing; and a contacts program may have an individual's profile information file open for modification by the user. It will be understood that the term "document" in this case is used generically to refer to any object, file or structure having content which may be edited by the user via the associated application program. Documents according to the present invention may include documents such as, but not limited to, e-mail messages, instant messages, word processing documents, spreadsheets, contact entries, personal profiles, calendar entries, memos, task reminders, and multimedia messages. Similarly, the terms "application program" and "software application" in this context refer to any application program for creating, composing, editing, or modifying documents.

The device 10 includes a camera application 56 for processing signals received by the microprocessor 38 from the camera 44 and a camera listener interface 60 for recognizing activation of the camera button 46 and coordinating interoperation of the camera application 56 and any active software applications 58. All or parts of the camera listener interface 60 and/or the camera application 56 could, in various embodiments, be integrated into the operating system 54 and/or other software applications 58. In some embodiments some of the camera listener interface functions and/or camera application functions could be implemented in appropriately configured hardware or firmware.

The camera listener interface 60 monitors the camera button 46. When a user activates the camera button 60, a signal is sent to the microprocessor 38. This signal may be an interrupt signal. When the camera listener interface 60 is invoked, it may notify the microprocessor 38 that it will be the handler of interrupts associated with the camera button 46. Thereafter, when the camera button 46 is pressed, the camera listener interface 60 is notified.

The camera listener interface 60 responds to activation of the camera button 46 in at least two ways. When the camera button 46 is first activated, the camera listener interface 60 causes the operating system 54 to interrupt or pause operation of the active software application 58. The operating system 54 then invokes an instance of the camera application 56, if one is not already running in the background. The camera application 56 may be invoked in a temporary viewfinder mode, wherein the display 22 functions as a viewfmder displaying the images being received by the photosensors within the camera 44. Using the viewfinder mode, the user can position the camera 44 so as to frame the image or view desired. In this mode, there may be additional functions or operation that the user may have available, including a zoom function or various settings, such as contrast, flash, red-eye reduction, etc.

With the camera application 56 active and functioning in a viewfinder mode, the user positions the device 10 such that the camera 44 is focused upon the desired scene or view. The user then activates the camera button 46 so as to capture the image seen by the camera 44. Upon activating the camera button 46, the camera application 56 receives image data from the camera 44 corresponding to the image received by the camera 44 at the time the camera button 46 is activated. The camera application 56 creates an image object containing the image data captured by the camera 44. In some embodiment, the image data may be saved in a file in memory.

The activation of the camera button 46 also triggers the camera listener interface 60 to cause the operating system to close or minimize the camera application 56 and to return to the active software application 58. Upon returning, the active software application 58 is passed the image object created by the camera application 56, and the image object is inserted in-line within the active document. For example, a digital image captured by the camera 44 would be inserted into the open e-mail, word processing document, contact profile, or calendar event at the location where the cursor was when the operation of the software application 58 was suspended. It will be understood that active software application 58 is capable of handling image data and the document includes input fields that allow for the input of graphic elements, such as digital images.

Accordingly, while a user is editing or creating a document using the active software application 58, the user can instantly and seamlessly switch the device 10 to a camera mode by simply activating the camera button 46. By activating the camera button 46 again while in the camera mode, an image is captured and inserted into the open document that the user was editing or creating, and control is then returned back to the active software application 58 to allow the user to continue editing or creating the document.

In some embodiments, the functioning of the camera listener interface 60 may only be enabled when there is a software application 58 active and when that active software application 58 has a document open in an editable mode. Accordingly, prior to triggering the invocation of the camera application 56, the camera listener module 60 may be configured to perform a check to determine if there is an active software application 58, whether that active software application 58 is of a type that is capable of handling image data, and whether that active software application 58 is in an 'editing mode', meaning that a document is open and able to accept image data. In such an embodiment, the camera listener module 60 may be configured to ignore the activation of the camera button 46 if an appropriate document and software application 58 are not active on the device 10. Alternatively, the active software application 58 may be configured to invoke the camera listener interface 60 when it enters an editing mode, thereby ensuring that the camera listener interface 60 only functions when an appropriate software application 58 is active and in an editing mode. In such an embodiment, the active software application 58 may disable or close the camera listener interface 60 when the software application 58 exits its editing mode, such as when the user begins manipulating pull down menus or otherwise renders the open document inactive. Those of ordinary skill in the art will understand from the present description that other methods or mechanisms may be employed to ensure the camera listener interface 60 is enabled when an active application has a document open with an active input field capable of receiving image data.

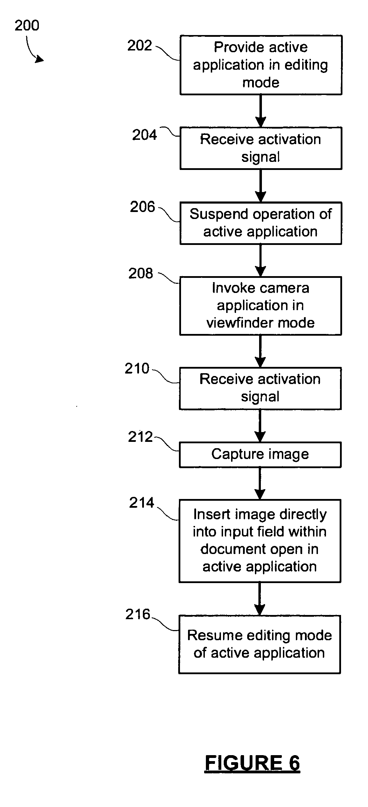

Reference is now made to Figure 6, which shows, in flowchart form, a method 200 for integrating camera operations into a mobile device. The first step 202 of the method 200 is to provide for an active software application 58 (Figure 1) operating in an editing mode. As discussed above, this may condition may be checked by the camera listener interface 60 (Figure 1) or the camera listener interface 60 may only be invoked by the active software application 58 entering the editing mode. Those of ordinary skill in the art will appreciate that there are various mechanisms or arrangements to test for this condition or to ensure that it is met.

In step 204, the operating system 38 (Figure 1) receives an activation signal from the camera button 46 (Figure 1), indicating that the user has triggered the camera button 46. The operating system 38 notifies the camera listener interface 60 that the camera button 46 has been activated and, in step 206, the camera listener interface 60 instructs the operating system 38 to suspend or switch away from operation of the active application. Then in step 208, the camera application 56 (Figure 1) is invoked to permit the user to utilize the device 10 (Figure 1) in a camera mode.

A second activation signal is received in step 210 when the user activates the camera button 46 while the device 10 is in camera mode. In step 212, in response to the activation of the camera button 46, the camera 44 (Figure 1) and the camera application 56 capture an image. The image may be stored as image data within an image object in memory. The image data may also or alternatively be stored within a file in memory.

In step 214, also in response to the second activation signal from the camera button 46 received in step 210, the camera listener interface 60 causes the operating system 38 to restore or switch back to the active software application 58, and the image captured in step 212 is inserted directly into an input field in an active document open within the active software application 58. Then, in step 216, the operating system 38 returns control to the active software application 58 to continue operation in the editing mode.

Accordingly, using the above-described method 200, the camera 44 functions as an "always-available" input device that can be used to embed images and image data into documents on the fly.

An example of a simplified code listing for implementing a program to perform, at least in part, the method 200 is provided below:

```
        // Set up the camera application
        public class CameraEnabledApp
        {
          // Instantiate the application and start listening for operating system events
          public static void main()
           {
             CameraEnabledApp myApp = new CameraEnabledApp(); //Create an
              instance of the camera application
             theApp.enterEventDispatcher(); //Wait for events
          }
          //Main class for the application. Here a new screen is created and displayed
          public CameraEnabledApp()
           {
                pushScreen(new ApplicationScreen()); //When the application starts,
                                                      create a new screen and display it
          }
        }
        //Logic for the application screen. This implements
        // a CameraListener that will allow events from the camera to be captured.
        class AppliationScreen implements CameraListener, KeyboardListener
        {
          public ApplicationScreen()
           {
                   add(new TextImageField()) //Add an input field to the screen; the
                                              input field accepts text or images
          }
          // This method from the CameraListener interface is invoked when a camera
        event occurs.
          public onCameraEvent(Image myCaputredImage)
           {
                    //This method is invoked when the CameraListener is implemented
        and the user presses the camera key
                    //In this specific instance, the image data (myCapturedImage) is added
        to the TextImageField.
       TextImageField.addObject(myCapturedImage);
          }
          }
       }
```

Those of ordinary skill in the art will appreciate that, although the foregoing specific embodiments refer to the camera listener interface 60 as being embodied as an application programming interface (API), the present invention is not limited to such an API. The functions and operations of the camera listener interface 60 may be embodied within the operating system 38, the basic input output system (BIOS), the software application 58, or otherwise.

The present invention is not limited to a particular processor architecture, operating system, or computer programming language. Any limitations presented as a result of specific architectures, operating systems, or computer programming languages are not intended as limitations of the present invention.

Certain adaptations and modifications of the invention will be obvious to those skilled in the art. Therefore, the above discussed embodiments are considered to be illustrative and not restrictive, the scope of the invention being indicated by the appended claims rather than the foregoing description.

## Claims

1. A method of capturing image data and inserting the image data into an active document on a mobile device (10), the mobile device (10) including a camera (44), a camera activator (46), and a camera listener interface (60), the mobile device further including an active application (58) in which the active document is open and a camera application, the method comprising:
determining that the active application is open in an editable mode and enabling the camera listener interface (60) in response thereto; and
when the camera listener interface (60) is enabled:
receiving a first signal from the camera activator (46);
suspending operation of the active application in response to detection of the first signal and invoking the camera application (56);
detecting a second signal from the camera activator (46); and
in response to detection of the second signal, capturing image data via the camera (44), and automatically resuming operation of the active application and inserting the image data into the active document open in the active application.

2. The method claimed in claim 1, wherein the mobile device (10) further includes a processor (38) and the camera activator (46) is configured to generate an interrupt on activation, and wherein receiving the first signal comprises receiving a first interrupt signal at the processor (38) and wherein receiving the second signal comprises receiving a second interrupt signal at the processor (38), and wherein enabling the camera listener interface (60) includes registering the camera listener interface (60) with the processor (38) as handler of interrupt signals from the camera activator (46).

3. The method claimed in claim 2, wherein receiving the first interrupt signal and receiving the second interrupt signal include notifying the camera listener interface (60).

4. The method of any one of claims 1 to 3, wherein determining that the active application is open in an editable mode includes determining that the active document has an active input field capable of receiving image data.

5. The method of any one of claims 1 to 4, wherein invoking the camera application (56) includes activating the camera application (56) in a viewfinder mode.

6. The method of any one of claims 1 to 5, wherein the active document includes a document selected from a group including an e-mail message, an instant message, a word processing document, a spreadsheet, a contact entry, a personal profile, a calendar entry, a memo, a task reminder, and a multimedia message.

7. The method of any one of claims 1 to 6, wherein capturing image data includes creating an image object containing the image data.

8. The method claimed in claim 7 wherein inserting includes passing the image object to the active application, whereupon the active application inserts the image data within an input field in the active document.

9. The method of any one of claims 1 to 8, wherein the camera activator (46) includes a triggering device selected from a group including a button, a key, a switch, a dial, a touch pad, a touch screen, a key combination, and a software device.

10. A mobile device (10), comprising:
a display (22);
a processor (38) and associated memory (24, 26), the processor being configured to run an active application and a camera application (56), the active application being configured to open an active document;
a camera (44) for capturing images and providing image data for the images to the processor (38);
a camera activator (46) responsive to activation; and
a camera listener interface (60) configured to be enabled when the active application is determined to be in an editable mode, and wherein the camera listener interface (60) is further configured to detect a first signal from the camera activator (46) and to cause the processor (38) to suspend the active application and invoke the camera application in response to the first signal from the camera activator (46), and,
wherein the camera listener interface (60) is further configured to detect a second signal from the camera activator (46) and, in response thereto, to cause the camera (44) to capture the image data and to cause the processor (38) to resume the active application and to pass the active application the image data for insertion into the active document within the active application.

11. The mobile device claimed in claim 10, wherein the camera activator (46) is configured to generate an interrupt on activation, and wherein the camera listener interface (60) is configured to be registered with the processor (38) as handler of interrupt signals from the camera activator (46) when the active application is determined to be in editable mode.

12. The mobile device claimed in any one of claims 10 or 11, wherein the camera application is configured to output an image object containing the image data.

13. The mobile device claimed in any one of claims 10 to 12, wherein invoking the camera application comprises invoking the camera application in a viewfinder mode in which the display (22) outputs an image corresponding to a view through the camera (44).

14. The mobile device claimed in any one of claims 10 to 13, wherein the active document includes a document selected from the group including an e-mail message, an instant message, a word processing document, a spreadsheet, a contact entry, a personal profile, a calendar entry, a memo, a task reminder, and a multimedia message.

15. The mobile device claimed in claim 10, wherein the camera activator (46) includes a triggering device selected from the group including a button, a key, a switch, a dial, a touch pad, a touch screen, a key combination, and a software device.

## Patentansprüche

1. Verfahren für das Erfassen von Bilddaten und das Einfügen der Bilddaten in ein aktives Dokument auf einem Mobilgerät (10), wobei das Mobilgerät (10) eine Kamera (44), ein Kamera-Aktivierungsmittel (46) und eine Kamera-Hörer-Schnittstelle (60) einschließt, wobei das Mobilgerät ferner eine aktive Anwendung (58), in der das aktive Dokument offen ist, und eine Kameraanwendung einschließt, wobei das Verfahren Folgendes umfasst:
das Feststellen, dass die aktive Anwendung in einem bearbeitbaren Modus offen ist, und das Freigeben der Kamera-Hörer-Schnittstelle (60) als Reaktion darauf, und
wenn die Kamera-Hörer-Schnittstelle (60) freigegeben ist:
das Empfangen eines ersten Signals von dem Kamera-Aktivierungsmittel (46),
das Anhalten des Betriebs der aktiven Anwendung als Reaktion auf das Erkennen des ersten Signals und das Aufrufen der Kameraanwendung (56),
das Erkennen eines zweiten Signals von dem Kamera-Aktivierungsmittel (46) und,
als Reaktion auf das Erkennen des zweiten Signals, das Erfassen von Bilddaten über die Kamera (44) und das automatische Wederaufnehmen des Betriebs der aktiven Anwendung und das Einfügen der Bilddaten in das aktive Dokument, das in der aktiven Anwendung offen ist.

2. Verfahren nach Anspruch 1, wobei das Mobilgerät (10) ferner einen Prozessor (38) einschließt und das Kamera-Aktivierungsmittel (46) dafür konfiguriert ist, auf eine Aktivierung hin eine Unterbrechung zu erzeugen, und wobei das Empfangen des ersten Signals das Empfangen eines ersten Unterbrechungssignals an dem Prozessor (38) umfasst und wobei das Empfangen des zweiten Signals das Empfangen eines zweiten Unterbrechungssignals an dem Prozessor (38) umfasst und wobei das Freigeben der Kamera-Hörer-Schnittstelle (60) das Anmelden der Kamera-Hörer-Schnittstelle (60) bei dem Prozessor (38) als Behandlungsroutine von Unterbrechungssignalen von dem Kamera-Aktivierungsmittel (46) einschließt.

3. Verfahren nach Anspruch 2, wobei das Empfangen des ersten Unterbrechungssignals und das Empfangen des zweiten Unterbrechungssignals das Benachrichtigen der Kamera-Hörer-Schnittstelle (60) einschließen.

4. Verfahren nach einem der Ansprüche 1 bis 3, wobei das Feststellen, dass die aktive Anwendung in einem bearbeitbaren Modus offen ist, das Feststellen einschließt, dass das aktive Dokument ein aktives Eingabefeld hat, das dazu in der Lage ist, Bilddaten zu empfangen.

5. Verfahren nach einem der Ansprüche 1 bis 4, wobei das Aufrufen der Kameraanwendung (56) das Aktivieren der Kameraanwendung (56) in einem Bildsuchermodus einschließt.

6. Verfahren nach einem der Ansprüche 1 bis 5, wobei das aktive Dokument ein Dokument einschließt, das ausgewählt ist aus einer Gruppe, die eine E-Mail-Nachricht, eine Sofortnachricht, ein Textverarbeitungsdokument, eine Kalkulationstabelle, einen Kontakteintrag, ein persönliches Profil, einen Kalendereintrag, ein Memo, eine Aufgabenerinnerung und eine Multimedia-Nachricht einschließt.

7. Verfahren nach einem der Ansprüche 1 bis 6, wobei das Erfassen von Bilddaten das Erzeugen eines Bildobjekts, das die Bilddaten enthält, einschließt.

8. Verfahren nach Anspruch 7, wobei das Einfügen das Übergeben des Bildobjekts an die aktive Anwendung einschließt, woraufhin die aktive Anwendung die Bilddaten innerhalb eines Eingabefeldes in dem aktiven Dokument einfügt.

9. Verfahren nach einem der Ansprüche 1 bis 8, wobei das Kamera-Aktivierungsmittel (46) eine Auslöseeinrichtung einschließt, die ausgewählt ist aus einer Gruppe, die einen Knopf, eine Taste, einen Schalter, eine Wählvorrichtung, ein Berührungsfeld, einen Berührungsbildschirm, eine Tastenkombination und eine Software-Einrichtung einschließt.

10. Mobilgerät (10), das Folgendes umfasst:
eine Anzeige (22),
einen Prozessor (38) und zugeordneten Speicher (24, 26), wobei der Prozessor dafür konfiguriert ist, eine aktive Anwendung und eine Kameraanwendung (56) laufen zu lassen, wobei die aktive Anwendung dafür konfiguriert ist, ein aktives Dokument zu öffnen,
eine Kamera (44) für das Erfassen von Bildern und das Bereitstellen von Bilddaten für die Bilder an den Prozessor (38),
ein Kamera-Aktivierungsmittel (46), das auf eine Aktivierung anspricht, und
eine Kamera-Hörer-Schnittstelle (60), die dafür konfiguriert ist, freigegeben zu werden, wenn festgestellt wird, dass sich die aktive Anwendung in einem bearbeitbaren Modus befindet, und wobei die Kamera-Hörer-Schnittstelle (60) ferner dafür konfiguriert ist, ein erstes Signal von dem Kamera-Aktivierungsmittel (46) zu erkennen und zu bewirken, dass der Prozessor (38) als Reaktion auf das erste Signal von dem Kamera-Aktivierungsmittel (46) die aktive Anwendung anhält und die Kameraanwendung aufruft, und
wobei die Kamera-Hörer-Schnittstelle (60) ferner dafür konfiguriert ist, ein zweites Signal von dem Kamera-Aktivierungsmittel (46) zu erkennen und, als Reaktion auf dasselbe, zu bewirken, dass die Kamera (44) die Bilddaten erfasst, und zu bewirken, dass der Prozessor (38) die aktive Anwendung wieder aufnimmt und der aktiven Anwendung die Bilddaten für das Einfügen in das aktive Dokument innerhalb der aktiven Anwendung übergibt.

11. Mobilgerät nach Anspruch 10, wobei das Kamera-Aktivierungsmittel (46) dafür konfiguriert ist, auf eine Aktivierung hin eine Unterbrechung zu erzeugen, und wobei die Kamera-Hörer-Schnittstelle (60) dafür konfiguriert ist, bei dem Prozessor (38) als Behandlungsroutine von Unterbrechungssignalen von dem Kamera-Aktivierungsmittel (46) angemeldet zu werden, wenn festgestellt wird, dass sich die aktive Anwendung in einem bearbeitbaren Modus befindet.

12. Mobilgerät nach einem der Ansprüche 10 oder 11, wobei die Kameraanwendung dafür konfiguriert ist, ein Bildobjekt auszugeben, das die Bilddaten enthält.

13. Mobilgerät nach einem der Ansprüche 10 bis 12, wobei das Aufrufen der Kameraanwendung das Aktivieren der Kameraanwendung in einem Bildsuchermodus einschließt, in dem die Anzeige (22) ein Bild ausgibt, das einer Ansicht durch die Kamera (44) entspricht.

14. Mobilgerät nach einem der Ansprüche 10 bis 13, wobei das aktive Dokument ein Dokument einschließt, das ausgewählt ist aus der Gruppe, die eine E-Mail-Nachricht, eine Sofortnachricht, ein Textverarbeitungsdokument, eine Kalkulationstabelle, einen Kontakteintrag, ein persönliches Profil, einen Kalendereintrag, ein Memo, eine Aufgabenerinnerung und eine Multimedia-Nachricht einschließt.

15. Mobilgerät nach Anspruch 10, wobei das Kamera-Aktivierungsmittel (46) eine Auslöseeinrichtung einschließt, die ausgewählt ist aus der Gruppe, die einen Knopf, eine Taste, einen Schalter, eine Wählvorrichtung, ein Berührungsfeld, einen Berührungsbildschirm, eine Tastenkombination und eine Software-Einrichtung einschließt.

## Revendications

1. Procédé de capture de données d'image et d'insertion des données d'image dans un document actif sur un dispositif mobile (10), le dispositif mobile (10) comprenant un appareil photo (44), un activateur d'appareil photo (46) et une interface auditeur d'appareil photo (60), le dispositif mobile comprenant en outre une application active (58) dans laquelle le document actif est ouvert et une application d'appareil photo, le procédé comprenant les étapes consistant à :
déterminer que l'application active est ouverte dans un mode modifiable et activer l'interface auditeur d'appareil photo (60) en réponse ; et
quand l'interface auditeur d'appareil photo (60) est actionnée :
recevoir un premier signal de l'activateur d'appareil photo (46) ;
suspendre le fonctionnement de l'application active en réponse à la détection du premier signal et appeler l'application d'appareil photo (56) ;
détecter un second signal de l'activateur d'appareil photo (46) ; et
en réponse à la détection du second signal, capturer des données d'image via l'appareil photo (44), et reprendre automatiquement le fonctionnement de l'application active et insérer les données d'image dans le document actif ouvert dans l'application active.

2. Procédé selon la revendication 1, dans lequel le dispositif mobile (10) comprend en outre un processeur (38) et l'activateur d'appareil photo (46) est configuré pour générer une interruption de l'activation, et dans lequel la réception du premier signal comprend la réception d'un premier signal d'interruption au niveau du processeur (38) et dans lequel la réception du second signal comprend la réception d'un second signal d'interruption au niveau du processeur (38), et dans lequel l'activation de l'interface auditeur de l'appareil photo (60) comprend l'étape consistant à enregistrer l'interface auditeur de l'appareil photo (60) avec le processeur (38) comme un gestionnaire de signaux d'interruption depuis l'activateur d'appareil photo (46).

3. Procédé selon la revendication 2, dans lequel la réception du premier signal d'interruption et la réception du second signal d'interruption comprennent la notification de l'interface auditeur de l'appareil photo (60).

4. Procédé selon l'une quelconque des revendications 1 à 3, dans lequel l'étape consistant à déterminer que l'application active est ouverte dans un mode modifiable comprend le fait de déterminer que le document actif a un champ d'entrée actif capable de recevoir des données d'image.

5. Procédé selon l'une quelconque des revendications 1 à 4, dans lequel l'étape consistant à invoquer l'application d'appareil photo (56) comprend l'activation de l'application d'appareil photo (56) dans un mode viseur.

6. Procédé selon l'une quelconque des revendications 1 à 5, dans lequel le document actif comprend un document choisi dans un groupe comprenant un courriel, un message instantané, un document de traitement de texte, une feuille de calcul, une entrée de répertoire, un profil personnel, une entrée de calendrier, une note, un rappel de tâche, et un message multimédia.

7. Procédé selon l'une quelconque des revendications 1 à 6, dans lequel la capture de données d'images comprend la création d'un objet d'image contenant les données d'image.

8. Procédé selon la revendication 7, dans lequel l'insertion comprend le passage de l'objet d'image à l'application active, où l'application active insère les données d'image à l'intérieur d'un champ d'entrée dans le document actif.

9. Procédé selon l'une quelconque des revendications 1 à 8, dans lequel l'activateur d'appareil photo (46) comprend un dispositif de déclenchement choisi dans un groupe comportant un bouton, une touche, un commutateur, un cadran, un pavé tactile, un écran tactile, une combinaison de touches, et un dispositif de logiciel.

10. Dispositif mobile (10) comprenant :
un écran d'affichage (22) ;
un processeur (38) et une mémoire associée (24, 26), le processeur étant configuré pour exécuter une application active et une application d'appareil photo (56), l'application active étant configurée pour ouvrir un document actif ;
un appareil photo (44) permettant de capturer des images et de fournir des données d'image pour les images au processeur (38) ;
un activateur d'appareil photo (46) répondant à l'activation ; et
une interface auditeur d'appareil photo (60) configurée pour être activée quand l'application active est déterminée comme étant en mode modifiable, et où l'interface auditeur d'appareil photo (60) est en outre configurée pour détecter un premier signal de l'activateur d'appareil photo (46) et pour amener le processeur (38) à suspendre l'application active et invoquer l'application d'appareil photo en réponse au premier signal de l'activateur d'appareil photo (46), et
où l'interface auditeur d'appareil photo (60) est en outre configurée pour détecter un second signal de l'activateur d'appareil photo (46) et, en réponse à ce dernier, pour amener l'appareil photo (44) à capturer les données d'image et pour amener le processeur (38) à reprendre l'application active et à passer à l'application active les données d'image afin de les insérer dans le document actif à l'intérieur de l'application active.

11. Dispositif mobile selon la revendication 10, dans lequel l'activateur d'appareil photo (46) est configuré pour générer une interruption sur l'activation, et où l'interface auditeur d'appareil photo (60) est configurée pour être enregistrée avec le processeur (38) comme gestionnaire de signaux d'interruption depuis l'activateur d'appareil photo (46) lorsque l'application active est déterminée comme étant en mode modifiable.

12. Dispositif mobile selon l'une quelconque des revendications 10 ou 11, dans lequel l'application d'appareil photo est configurée pour produire en sortie un objet d'image contenant les données d'image.

13. Dispositif mobile selon l'une quelconque des revendications 10 à 12, dans lequel l'étape consistant à invoquer l'application d'appareil photo comprend le fait d'appeler l'application d'appareil photo dans un mode viseur dans lequel l'écran d'affichage (22) produit en sortie une image correspondant à une vue dans l'appareil photo (44).

14. Dispositif mobile selon l'une quelconque des revendications 10 à 13, dans lequel le document actif comprend un document choisi dans le groupe comportant un courriel, un message instantané, un document de traitement de texte, une feuille de calcul, une entrée de répertoire, un profil personnel, une entrée de calendrier, une note, un rappel de tâche, et un message multimédia.

15. Dispositif mobile selon la revendication 10, dans lequel l'activateur d'appareil photo (46) comprend un dispositif de déclenchement choisi dans le groupe comprenant un bouton, une touche, un commutateur, un cadran, un pavé tactile, un écran tactile, une combinaison de touches, et un dispositif de logiciel.
